(19) Europäisches Patentamt
European Patent Office
Office européen des brevets

(11) **EP 2 753 958 B1**

(12) **EUROPÄISCHE PATENTSCHRIFT**

(45) Veröffentlichungstag und Bekanntmachung des Hinweises auf die Patenterteilung:
**21.06.2017 Patentblatt 2017/25**

(21) Anmeldenummer: **12768704.4**

(22) Anmeldetag: **30.08.2012**

(51) Int Cl.:
***G01V 99/00*** *(2009.01)*

(86) Internationale Anmeldenummer:
**PCT/DE2012/100256**

(87) Internationale Veröffentlichungsnummer:
**WO 2013/034143 (14.03.2013 Gazette 2013/11)**

(54) **VERFAHREN ZUR VERIFIKATION VON ALTER-TIEFEN-BEZIEHUNGEN VON GESTEIN IN SEDIMENTBECKEN**

METHOD FOR VERIFYING AGE-DEPTH RELATIONSHIPS OF ROCK IN SEDIMENTARY BASINS

PROCÉDÉ DE VÉRIFICATION DE RELATIONS ÂGE-PROFONDEUR DE ROCHE DANS DES BASSINS SÉDIMENTAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2011 DE 102011112292**

(43) Veröffentlichungstag der Anmeldung:
**16.07.2014 Patentblatt 2014/29**

(73) Patentinhaber: **Geomar Helmholtz-Zentrum für Ozeanforschung Kiel**
**24148 Kiel (DE)**

(72) Erfinder:
• **EISENHAUER, Anton**
**24226 Heikendorf (DE)**
• **HORN, Dietrich**
**verstorben (DE)**

(74) Vertreter: **Hansen, Jochen**
**Hansen und Heeschen**
**Patentanwälte**
**Eisenbahnstrasse 5**
**21680 Stade (DE)**

(56) Entgegenhaltungen:
**EP-A1- 1 435 429**

• **TEICHERT B M A ET AL: "Controls on calcium isotope fractionation in sedimentary porewaters", EARTH AND PLANETARY SCIENCE LETTERS, NORTH HOLLAND PUBL., CO, NL, Bd. 279, Nr. 3-4, 30. März 2009 (2009-03-30), Seiten 373-382, XP026000615, ISSN: 0012-821X, DOI: 10.1016/J.EPSL.2009.01.011 [gefunden am 2009-02-15]**
• **GUSSONE N ET AL: "Reconstruction of Caribbean Sea surface temperature and salinity fluctuations in response to the Pliocene closure of the Central American Gateway and radiative forcing, using delta<44/40>Ca, delta<18>O and Mg/Ca ratios", EARTH AND PLANETARY SCIENCE LETTERS, NORTH HOLLAND PUBL., CO, NL, Bd. 227, Nr. 3-4, 15. November 2004 (2004-11-15), Seiten 201-214, XP004613614, ISSN: 0012-821X, DOI: 10.1016/J.EPSL.2004.09.004**

**Beschreibung**

Die Erfindung betrifft ein Verfahren zur Verifikation von Alters-Tiefen-Beziehungen von Gestein in Sedimentbecken nach dem Oberbegriff des Hauptanspruches. Diese Verifikation kann im Allgemeinen auf dem Gebiet der Öl und Gaserkundung genutzt werden. Insbesondere ermöglicht die Erfindung ein Verfahren zur Validierung und Kalibrierung von mathematischen Modellen sedimentärer Becken (Sedimentbecken wie z.B. das Norddeutsche Becken).

Sedimentbecken sind Räume, in denen sich die Erdkruste, aufgrund der Sedimenteinlagerung, absenkt. In ihnen lagern sich von den Kontinenten erodierte Sedimente ab, die durch Flüsse oder Meeresströmungen dorthin transportiert werden. Immer neue Sedimentschichten werden abgelagert, eine auf die andere, wodurch das Becken verfüllt und die Erdkruste in den Erdmantel gedrückt wird.

In Sedimentbecken werden auch große Mengen organischer Substanz eingelagert, welche aufgrund der Einwirkung von Temperatur und Druck zu Erdgas und Erdöl in geologischen Zeiträumen umgewandelt werden. Ein für die Exploration von Erdgas oder Erdöl entscheidender Parameter ist dabei die Kenntnis der Tiefe der erdölführenden Erdschichten. Als Beispiel sei angeführt, dass das meiste heute zu fördernde Erdöl im Zeitalter des Jura entstanden ist. Diese Schicht ist heute natürlich nicht mehr an der Oberfläche sondern durch die Überlagerung jüngerer abgetragener Schichten in einer gewissen Tiefe (etwa 1 bis 2 Kilometer) unterhalb der heutigen Erdoberfläche gerückt. Das zu fördernde Öl lagert sich, da es leichter ist als Wasser, oberhalb der Juraschicht ein. Es ist daher wichtig zu wissen, wo das "Jura" unterhalb der Oberfläche denn ist, und wie der allgemeine Verlauf der vertikalen Bewegung nach unten, aber auch ggf. nach oben, zeitlich abgelaufen ist. Dies kann durch eine Alters-Tiefen-Beziehung, dieses ist ein Diagramm in dem die Tiefe der Gesteinsschicht unterhalb der Erdoberfläche als Funktion der Zeit dargestellt ist, beschrieben werden. Diese Alters-Tiefen-Beziehung wird durch mathematische Modellierung, sogenannte Beckenmodelle, ermittelt.

Ein Beckenmodell ist eine diskretisierte mathematische Darstellung eines geologischen Beckens, in Form einer Vielzahl von Zellen, die ein Maschennetz bilden (Finite Elemente). Der Simulator eines Beckenmodells ermöglicht es, in jeder Zelle eine bestimmte Zahl von Parametern zu berechnen. Das Ziel der Beckenmodellierung ist es eine Alters-Tiefen-Beziehung für das Sedimentbecken zu erstellen, aus dem dann die Lage gewisser, öl- und gasführender Schichten, als Funktion der Zeit vorhergesagt werden kann. Aufgrund dieser Vorhersage heraus werden Entscheidungen getroffen, ob das sogenannte Abteufen von Probebohrungen erfolgreich ist oder nicht. Die Kosten für Probebohrungen sind hoch, so dass genaue Vorhersagen der Beckenmodelle ein wichtiger kalkulatorischer Posten bei der Erdöl- oder Erdgasexploration sind.

In Teichert B M A et al.: "Controls on calcium isotope fractionation in sedimentary porewaters", Earth and planetary science letters, North Holland Publ., Co, NL, Bd. 279, Nr. 3-4, 30. März 2009 (2009-03-30), Seiten 373-382, ist die Ca-Isotopenfraktionierung bei der Ausfällung von sog. authigenen Karbonaten beschrieben.

In Gussone N et al.: "Reconstruction of Caribbean Sea surface temperature and salinity fluctuations in response to the Pliocene closure of the Central American Gateway and radiative forcing, using delta<44/40>Ca, delta<18>0 and Mg/Ca ratios", Earth and planetary science letters, North Holland Publ., Co, NL, Bd. 227, Nr. 3-4, 15. November 2004 (2004-11-15), Seiten 201-214, werden Ca-Isotopenmessungen für die Rekonstruktion der geologischen Schließungsgeschichte des Isthmus von Panama angewendet.

Aus der Druckschrift EP 1 435 429 A1 ist ein Verfahren und ein System zur zeitversetzen Analyse von Ursache und Wirkung von Änderungen für einen Bohrlochabschnitt bekannt, wobei ein Erfassen von ersten Protokolldaten eines Logging Sensors während eines ersten Durchgangs durch den Bohrlochabschnitt sowie ein Erfassen von zweiten Protokolldaten des Protokollierungssensors während eines zweiten Durchgangs durch den Bohrlochabschnitt erfolgt, wobei weiter ein Berechnen einer Vielzahl von Delta-Werten zwischen den ersten Protokolldaten und den zweiten Protokolldaten durch Ableiten eines beobachteten Effekts unter Verwendung der Delta-Werte erfolgt und im Anschluss ein Identifizieren einer Korrelation zwischen den beobachteten Effekten und einem ursächlichen Ereignis und Anzeigen der Korrelation auf einer Anzeigevorrichtung erfolgt.

Die Schwierigkeit bei der Beckenmodellierung ist es, dass es aufgrund von tektonischen Bewegungen und anderen geologischen Prozessen erhebliche individuelle Unterschiede von Becken zu Becken geben kann. Die individuelle mathematische Modellierung eines Sedimentbeckens auch zur Bestimmung der relativen vertikalen Bewegung einer Schicht, in einem Becken unter Berücksichtigung aller Einflussgrößen auf die Absenkungen ist zur Zeit noch nicht befriedigend gelöst.

Um die Genauigkeit und den Wahrheitsgehalt der Beckenmodelle zu erhöhen, wäre es daher von Vorteil, wenn zu einem Becken und dessen Beckenmodell "Fixpunkte" bekannt sind, die es ermöglichen, eine Alters-Tiefen-Beziehung, unabhängig vom Beckenmodell, zu erstellen und somit die Beckenmodelle mit einer unabhängig erstellten Alters-Tiefen-Beziehung validiert und kalibriert werden könnten.

Aufgabe der Erfindung ist es, ein Verfahren zur Verfügung zu stellen, dass eine Verifikation auf beliebigem Wege ermittelter Alters-Tiefen-Beziehungen zur Validierung und ggf. Kalibrierung von Sedimentbeckenmodellen durch die Bestimmung einer Alters-Tiefen-Beziehung ermöglicht.

Die Erfinder haben erkannt, dass sich die Aufgabe der Erfindung lösen lässt, wenn ein Verfahren zur Bestimmung der Alters-Tiefen-Beziehung angewendet wird, dass z.B. die folgenden Schritte umfasst:

i. Herauslösen des ausgefallenen Kalziumcarbonats aus Sedimentgesteinen mittels verdünnter Säuren (->Lösung A)

ii. Bestimmung des Ca Isotopenverhältnisses der beiden häufigsten Ca-Isotope $^{40}Ca$ und $^{44}Ca$ ($^{44}Ca/^{40}Ca$) oder auch eines anderen Ca-Isotopenverhältnisses zur Ermittlung des Isotopenverhältnisses des ausgefällten $CaCO_3$ (CC). Das Verhältnis kann in der Isotopengeologie üblichen Delta-Notation angegeben ($\delta^{44/40}Ca_{CC}$) werden.

iii. Berechnung des Ca-isotopischen Unterschiedes ($\Delta^{44/40}Ca$) zwischen der Lösung (BS=Bulk Solution) und dem aus der Lösung ausgefallenen $CaCO_3$ (CC) nach ($\Delta^{44/40}Ca=\delta^{44/40}Ca_{CC} - \delta^{44/40}Ca_{BS}$) wenn $\delta^{44/40}Ca_{BS}$ bekannt ist. Anderen falls zunächst Bestimmung der $\delta^{44/40}Ca_{BS}$-Werte.

iv. Ermittlung der $CaCO_3$-Ausfällungstemperatur über den Zusammenhang $\Delta^{44/40}Ca(‰)=0.02$ (‰/°C)∗Temperatur (°C)-1.46‰ (Gussone et al. 2004) nach Gleichung 1.

$$\text{Gleichung 1:} \qquad T(°C)=\frac{\Delta^{44/40}Ca+1.46}{0.02}$$

v. Die Ermittlung der $CaCO_3$-Ausfällungstiefe (X in Metern (m)) erfolgt nach Gleichung 2:

$$\text{Gleichung 2:} \qquad X(m) = \frac{\delta^{44/40}Ca_{CC} - \delta^{44/40}Ca_{BS} + 1.16}{0.00066}$$

Sollte $\delta^{44140}Ca_{BS}$ nicht bekannt sein sind die folgenden Schritte notwendig:

a) Abtrennung und Gewinnung der Strontiumionen ($Sr^{2+}$) aus Lösung A beispielsweise durch Ionenchromatographie.

b) Bestimmung des Sr-Isotopenverhältnisses $^{87}Sr/^{86}Sr$ oder eines anderen Sr-Isotopenverhältnisses der abgetrennten Strontiumionen ($Sr^{2+}$).

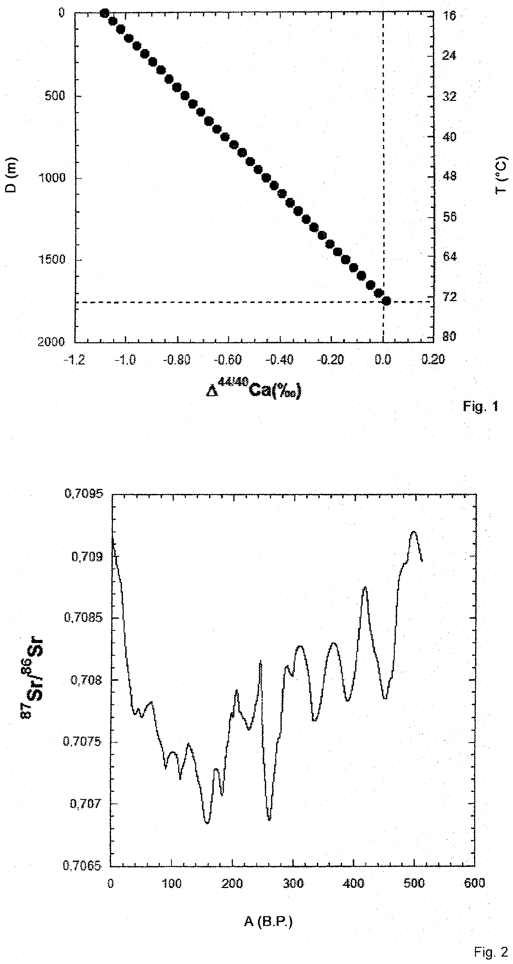

c) Bestimmung des Alters der Proben durch Vergleich des gemessenen $^{87}Sr/^{86}Sr$-Isotopenverhältnisses mit dem bekannten Sr-Isotopenverhältnisses des phanerozoischen Meerwassers (Fig. 2).

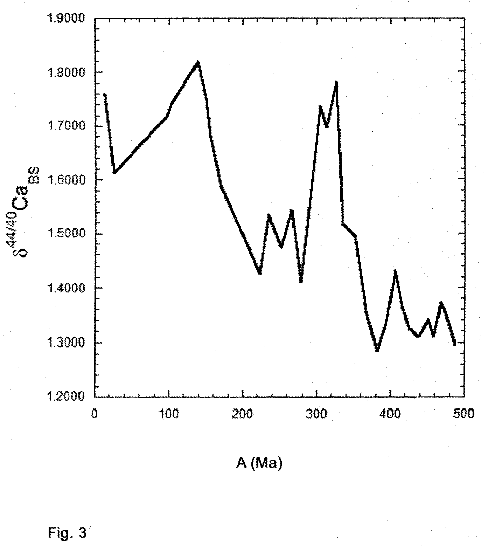

d) Bestimmung des $\delta^{44/40}Ca_{BS}$ anhand bekannter Zusammenhänge (Fig. 3).

Anschließend wird weiter nach Schritt iv verfahren.

Es kann dabei von Vorteil sein, wenn vor der Bestimmung des Ca Isotopenverhältnisses (Schritt ii) zur Kalibrierung eine Lösung bekannter Caisotopischer Zusammensetzung (Spike-Lösung) zugegeben wird.

Das Herauslösen des ausgefallenen Kalziumcarbonats aus Sedimentgesteinen mittels verdünnter Säuren (Schritt i) sollte dabei mit einer schwachen organischen oder anorganischen Säure, z.B. Ameisensäure, oder 2 N $HNO_3$ geschehen, damit sichergestellt ist, dass kein Kalzium aus dem nichtkalziumkarbonatischen Wirtsgestein herausgelöst wird, d.h. es sicher gestellt wird, dass die originäre Kalziumisotopenzusammensetzung des im Gestein ausgefallenen Kalziumkarbonats gemessen werden kann. Dem Fachmann sind geeignete Säuren und ihre Stärken bekannt.

Die Erfinder haben erstmalig erkannt, dass sich das Phänomen der temperaturabhängigen Kalziumisotopen-Fraktionierung bei der Ausfällung von Kalziumcarbonat ($CaCO_3$) in porösen Gesteinen zur Bestimmung einer empirischen Alters-Tiefen-Beziehung nutzen lässt.

Aus dem Zusammenhang von Ausfällungstemperatur ($T_{Ausfall}$), Bohrtiefe und geogener Temperaturzunahme als Funktion der Bohrtiefe kann eine empirische Alters-Tiefen-Beziehung für einen oder mehrere Tiefen ermittelt werden (Fixpunkte). Diese Werte können dann mit den aus theoretischen Beckenmodellen ermittelten Werten verglichen werden. Diese Fixpunkte ermöglichen eine Kalibrierung von Beckenmodellen was zu einer Verbesserung bei der Identifizierung von ölführenden Schichten und zur Einsparung von Bohrkosten führen kann.

Bei der Reifung des Öls werden große Menge an Methan ($CH_4$) und evtl. Kohlendioxid ($CO_2$) produziert, welches in den Gesteinsschichten aufsteigt und mit dem im Gestein noch vorhandenen Meerwasser (meistens aus dem Jura Meer, aber auch Wässern aus anderen Epochen) und dem darin gelösten Kalzium zu Kalziumcarbonat ($CaCO_3$) reagiert. Dies geschieht in einer gewissen Tiefe oberhalb der ölführenden Schichten, die eindeutig durch Druck und vor allem Temperatur charakterisiert sind. Insbesondere ist die $T_{Ausfall}$ durch den geogenen Gradienten mit einer Temperaturzunahme von -0.033 °C/m definiert (die Daumenregel dabei ist eine Zunahme von 3°C pro 100 m Tiefe im Erdreich). In anderen Worten in ca. 100 m Tiefe ist die Temperatur um 3.3°C höher als an der Oberfläche. Die tatsächliche Temperatur in 100 m Tiefe ergibt sich dann aus der durchschnittlichen Temperatur an der Erdoberfläche von ~15°C und der geogenen Zunahme ($T_{Ausfall}$) von 3.3°C; d.h. man kann in einer Erdtiefe von 100 m von einer Temperatur in der Größenordnung von ~18,3°C ausgehen ($T_{geogen}$ =15°C + (0.033 °C/m)*Tiefe(m)). Die geogene Zunahme der Temperatur mit der Tiefe ist eine Faustregel, die in einem gewissen statistischen Rahmen schwanken kann. Der tatsächliche Temperaturverlauf in einem Sedimentbecken kann durch die direkten Temperaturmessungen in einem Bohrloch korrigiert werden.

Unabhängig vom geogenen Zusammenhang kann $T_{Ausfall}$ durch die Messung eines bestimmten Ca-Isotopenverhältnisses (hier: $^{44}Ca/^{40}Ca$) rekonstruiert werden. Beim Vergleich von $T_{Ausfall}$ mit $T_{geogen}$ stellt man in der Regel fest, dass $T_{Ausfall}$ immer geringer ist als $T_{geogen}$ ($T_{Ausfall} < T_{geogen}$). Dies liegt daran, dass die erbohrte Tiefe in der die Gesteine heute erbohrt werden und natürlich einer höheren Temperatur entsprechen als die Tiefe in welcher die Kalziumcarbonat Ausfällung, in der Regel viele Millionen Jahre früher erfolgt ist.

Die Ca-Isotopie der Calciumcarbonate ($CaCO_3$, Calcite und Aragonite) ist temperaturabhängig, in der Form, dass der aus kinetischen Gründen negative Ca-isotopische Unterschied zwischen der Lösung (BS=Bulk Solution) und dem aus der Lösung ausgefallenen $CaCO_3$ (CC) als Funktion der Temperatur (siehe Gleichung) betragsmäßig immer kleiner wird

$$\Delta^{44/40}Ca = \delta^{44/40}Ca_{CC} - \delta^{44/40}Ca_{BS}$$

Entsprechend der folgenden Gleichung ist $\Delta^{44/40}Ca$ (=Fraktionierungsfaktor) relativ groß für niedrige und klein für höhere Temperaturen. Das isotopische Gleichgewicht (gleicher Wert von BS und CC) wird dabei entsprechend bei einer Temperatur von annähernd 73 °C erreicht, bei der es keinen isotopischen Unterschied mehr zwischen BS und CC gibt. Eine Temperatur Rekonstruktion ist daher nur im Temperaturintervall bis $\leq$ 73 °C möglich.

$$T\ (°C) = (\Delta^{44/40}Ca + 1{,}46) / 0{,}02$$

Die Gleichung gilt für Temperaturen < -73 °C ($\Delta^{44/40}Ca=0$). $\Delta^{44/40}Ca$ wird in Promill (‰) angegeben.

Geht man von dem allgemeinen Geothermischen Gradienten von 0.033 °C/m und einer durchschnittlichen Temperatur an der Erdoberfläche von annähernd 15 °C aus, so kann die Temperaturabhängigkeit der Ca-Isotopie Werte in eine Tiefenabhängigkeit, entsprechend der folgenden Gleichung, überführt werden. Dies bedeutet, dass, falls es zu einer $CaCO_3$ Ausfällung in der geologischen Tiefe kommt, dessen $\Delta^{44/40}Ca$ Isotopenwert eindeutig die geologische Tiefe und Temperatur widerspiegelt, es mithin möglich ist, die geologische Absenkungsrate und -geschichte zu rekonstruieren.

$$\Delta^{\frac{44}{40}}Ca(m) = [15 + 0.033 \cdot X(m)] \cdot 0.02 - 1.46$$

Zur Temperaturbestimmung ist bei der $CaCO_3$-Ausfällung neben dem Messwert der Ca-isotopischen Zusammensetzung für ausgefallenes $CaCO_3$ ($\delta^{44/40}Ca_{CC}$) auch noch eine Angabe über die Ca-isotopische Zusammensetzung der Mutterlösung ($\delta^{44/40}Ca_{BS}$) erforderlich. Der Zusammenhang zwischen ausgefälltem $CaCO_3$ (CC) ($\delta^{44/40}Ca_{CC}$), der Mutterlösung BS ($\delta^{44/40}Ca_{BS}$), dem geothermischen Gradienten und der Tiefenlage X(m) in der Erdkruste während der $CaCO_3$-Ausfällung ergibt sich über

$$\delta^{\frac{44}{40}}Ca_{CC} = [15 + 0.033 \cdot X(m)] \cdot 0.02 - 1.46 + \delta^{\frac{44}{40}}Ca_{BS}$$

Zur Gleichung 2

$$\text{Gl. 2} \qquad X(m) = \frac{\delta^{\frac{44}{40}}Ca_{CC} - \delta^{\frac{44}{40}}Ca_{BS} + 1.76}{0.00066}$$

Die Fig. 1 zeigt graphisch den Zusammenhang zwischen der Ca-Isotopenfraktionierung, der Temperatur (T) und der Tiefenlage (X)

Für die Bestimmung von $\delta^{44/40}Ca_{BS}$ muss die Calcium-isotopische Zusammensetzung der Mutterlösung (BS) bekannt sein, z.B. durch Meerwasser des entsprechenden erdgeschichtlichen Ablagerungsmilieus. Falls keine originalen Lösungen mehr vorhanden sind, kann das Alter der Mutterlösung, aus dem die Karbonate ausgefallen sind, mittels einer

Bestimmung der $^{87}Sr/^{86}Sr$ Isotopenverhältnisse der aus dem Sedimentgestein extrahierten Strontiumionen ($Sr^{++}$) und dem Vergleich mit der phanerozoischen $^{87}Sr/^{86}Sr$-Meerwasserkuve ermittelt werden. Eine derartige $^{87}Sr/^{86}Sr$-Meerwasserkuve ist in Fig. 2 dargestellt.

Ist das Alter der Mutterlösung bekannt, kann dann auch der $\delta^{44/40}Ca_{BS}$ aus der Fig. 3 abgelesen werden.

Die ($CaCO_3$)-Aufällungstemperatur und -Tiefe des ausgefällten $CaCO_3$ ergibt sich dann entsprechend GI. 2.

Die Bestimmung des Ca- und Sr-Isotopenverhältnisses findet mit Hilfe der Massenspektrometrie (MS) statt. Im Folgenden soll exemplarisch diese Methode genauer erläutert werden, mit Hilfe derer das erfindungsgemäße Verfahren durchgeführt werden kann, der Fachmann wird gegebenenfalls in der ihm bekannten Art und Weise Änderungen einzelner Prozessparameter vornehmen.

Das Eluat, welches im wesentlichen nur noch das Kalzium enthält, wird auf ca. 1 $\mu$l eingeengt und auf ein ca. 1 mm breiten Rheniumdraht, das sogenannte Filament, aufgetragen. Diese Probe wird dann in die Ionisationseinheit eines Thermionenmassenspektrometers eingebaut. Nachdem die Ionisierungseinheit evakuiert ist und dort ein Druck von weniger als 10-6 mbar herrscht, wird das Filament langsam, bis es rotglühend wird, hochgeheizt. Dadurch wird das auf dem Filament befindliche Kalizium und seine Isotopen $^{40}Ca$ und $^{44}Ca$ thermisch evaporiert und ionisiert. Die evaporierten Ionen geraten in ein angelegtes elektrisches Feld mit einer Beschleunigungspannung von ca. 10.000 Volt. Die beschleunigten Ionen, welche verschiedene ionen-optische Linsen passieren müssen, erreichenden Magneten, welche aufgrund des massenabhängigen Gleichgewichts der Lorentz-Kraft und der Zentripetalkraft für eine Aufspaltung des Ionenstrahls sorgen. Die leichteren Ionen (hier 40Ca) fliegen einen engeren Radius als die schwereren Ionen (hier $^{44}Ca$). Nach dem Durchgang des Magneten treffen die Ionen auf Nachweiseinheiten, sogenannten Faraday Becher, wo die Ionen von einer leitetenden Schicht gebremst werden. Die Ionen generieren in diesem Becher einen elektrischen Strom, welcher über einen hochohmigen Widerstand (~$10^{11}$ Ohm) fließt und eine relativ hohe elektrische Spannung erzeugt, welche einfach gemessen werden kann. Dies wird für jedes Ion einzeln getan, so dass man für die Auswertung der Intensitäten die gemessene Spannung zur Auswertung hat. Die Anzahl der geflossenen Ionen ergibt sich dann aus dem Verhältnis der Massen, da die Spannung direkt proportional der geflossenen Ionen pro Zeit ist. Die Auswertung erfolgt computergestützt über einen bekannten Algorithmus.

Nach der Messung der $\delta^{44/40}Ca$ und $^{87}Sr/^{86}Sr$-Werte sind nun folgende Parameter der Probe bekannt:

1. Die Temperatur während des Zeitpunkts der Ausfällung ($T_{Ausfall}$) des $CaCO_3$ ermittelt aus den $\delta^{44/40}Ca$ Werten und Gleichung 1.

2. Die Tiefe ("$CaCO_3$-Ausfällungstiefe") unterhalb der Erdoberfläche in welcher die Ausfällung stattgefunden hat, ermittelt aus den $\delta^{44/40}Ca$-Werten und Gleichung 2.

3. Aus der Bohrtiefe und dem bekannten Alter der Gesteinsschicht kann die Absenkungsrate ermittelt werden [(Bohrtiefe (m))/(Alter des Gesteins ()Ma)= Absenkungsrate (m/Ma)]

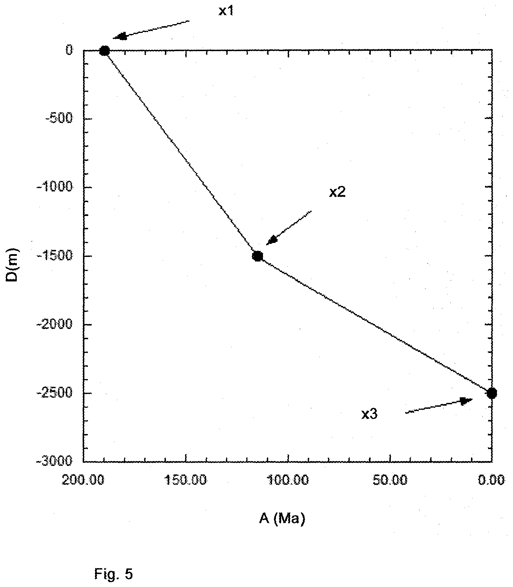

Als Ergebnis des Vorgehens erhält man eine Alters-Tiefenbeziehung für ein Gestein, so wie man es auch durch eine mathematische Beckenmodellierung anstrebt. Diese Zusammenhänge können nun in einer empirischen Alters-Tiefen Beziehung (empirisches Beckenmodell) (Fig. 5) dargestellt werden. Die nach unserem Verfahren vorgeschlagenen Werte erlauben nun eine Validierung der Werte des auf theoretischen Annahmen und seismischen Profilen beruhenden Beckenmodells. Im Idealfall stimmen die aus unserem Verfahren ermittelten Werte mit den Werten aus der Beckenmodellierung überein. In diesem Fall ist das Beckenmodell zuverlässig.

Im Diskrepanzfall, wenn empirischer und theoretischer Wert nicht übereinstimmen, müssen die Annahmen, auf denen das Beckenmodell beruht, überprüft und ggf. verändert werden, so dass beide Ansätze in Übereinstimmung gebracht werden ("Kalibration des Beckenmodells"). Daraus ergibt möglicherweise sich auch eine Veränderung der Vorhersage für die Lage der ölführenden Schichten und eine entsprechende Anpassung der angestrebten Bohrteufe.

Die Absenkung der Gesteine, nachdem diese die Erdoberfläche verlassen haben, ist in der Regel nicht linear und kann nur über komplexe mathematische Beckenmodelle in Grenzen in gewissen Grenzen rekonstruiert werden. Der Vergleich der theoretisch ermittelten Alters-Tiefenbeziehung eines bestimmten Beckens mit den mittels unseren Verfahrens ermittelten Alters-Tiefenbeziehung gibt dann wichtige Hinweise auf die Linearität der Absenkung. Bei größeren Abweichungen muss dann von einer nicht-Linearität der Absenkung oder von falschen Modellansätzen ausgegangen werden. In jedem Fall ist im letzten Fall eine Überarbeitung des zugrunde liegenden mathematischen Modells notwendig.

Das vorgestellte Verfahren mathematische Beckenmodell mit empirischen Alters-Tiefenbeziehungen zu vergleichen und/oder zu kalibrieren erhöht die Zuverlässigkeit von Beckenmodellen, erhöht die Trefferwahrscheinlichkeit von ölführenden Schichten und spart Bohrkosten.

Weitere Vorteile und Merkmale der Erfindung ergeben sich aus nachfolgender Beschreibung eines bevorzugten Ausführungsbeispiels anhand der beigefügten Zeichnung. Dabei zeigt:

Fig. 1    die Abhängigkeit der $\Delta^{44/40}Ca_{CC}$ Werte als Funktion der Tiefe (linke Achse) und der Temperatur (rechte Achse) vom Ca-Isotopenverhältnis.

Fig. 2 eine $^{87}Sr/^{86}Sr$ Kurve des phanerozoischen Meerwassers. Durch Bestimmung des $^{87}Sr/^{86}Sr$ Wertes des Calcits (CC) kann das Alter der Mutterlösung (BS) bestimmt werden.

Fig. 3 die $\delta^{44/40}Ca_{BS}$-Kurve für das phanerozoische Meerwasser. Mittels des aus der $^{87}Sr/^{86}Sr$-Kurve ermittelten Alters lässt sich nunmehr der zur Berechnung notwendige $\delta^{44/40}Ca_{BS}$-Wert ermitteln.

Fig. 4 die erfindungsgemäß ermittelten Temperaturwerte (in °C) aus der Tabelle 1 als Funktion ihrer Teufe. Die Symbole entsprechen dabei ganz bestimmten Bohrlokationen. Die Pfeile in der Darstellung markieren jeweils die durchschnittlichen Ausfällungstemperaturen für die verschiedenen Symbole bzw. Lokationen. Zusammen mit den Datenpunkten verschiedener Lokationen ist auch der thermische Gradient dargestellt.

Fig. 5 ein Beispiel einer erfindungsgemäß ermittelten empirischen Alters-Tiefen Beziehung (empirisch entwickeltes Beckenmodell) aus den Messwerten. Es ist anhand des empirisch ermittelten Fixpunktes deutlich die Nicht-Linearität der Absenkungsrate zu erkennen.

Bei der Fig. 1 wird davon ausgegangen, dass an der Erdoberfläche (Tiefe=0 m) eine Temperatur von 15°C herrscht. Der dazugehörige Isotopenwert reflektiert den $\Delta^{44/40}Ca_{CC}$ Wert den ein aus Jura Meerwasser ausgefallenes Kalziumkarbonat bei einer Temperatur von 15°C annehmen würde.

Die Zunahme der $\Delta^{44/40}Ca_{CC}$ Werte reflektiert den hier angenommenen geogenen Temperaturgradienten mit einer Zunahme von 0.033 °C/m. Ein $\Delta^{44/40}Ca_{CC}=0$ wird bei einer Temperatur von 73°C und einer dazugehörigen Tiefe von 1750 m angenommen. Angaben darüber hinaus sind nicht mehr möglich, da die $\Delta^{44/40}Ca_{CC}$-Werte nicht positiv werden können.

Die Allgemeinheit der Lehre nicht einschränkend soll die Erfindung anhand der folgenden Beispiele erläutert werden.

Für eine in 700 m Teufe entnommene Kalziumkarbonatprobe ergeben sich beispielsweise folgende Ergebnisse:

**Probennahme:** Die Probennahme erfolgt am erbohrten Gestein, in der Regel einem Stück eines Bohrkerns. Gesucht werden Kernstrecken wo die Porosität durch Einlagerung von erkennbar weißem Kalziumkarbonat verringert ist. Aus diesem Material wird mittels eines Hammers, besser einer Fräse oder Hohlbohrers ein Stück des Gesteins, ca. 5 cm$^3$ vom Bohrkern abgetrennt. Dieses Handstück wird dokumentiert. Ein Teil des Handstücks wird pulverisiert und eine Röntgendiffraktometrie durchgeführt um den prozentualen Anteils des Kalziumkarbonats zu bestimmen und auch dessen Polymorphie, d.h. ob das Kalziumkarbonat als Kalzit oder Aragonit vorliegt. Nach diesem Arbeiten wird das Kalziumkarbonat mit einer schwachen Säure, z.B. Ameisensäure, oder 2 N HNO$_3$ herausgelöst. Die Säure soll schwach sein, damit kein Kalzium aus dem nichtkalziumkarbonatischen Wirtsgestein herausgelöst und wird, d.h. es sicher gestellt wird, dass die originäre Kalziumisotopenzusammensetzung des im Gestein ausgefallenen Kalziumkarbonats gemessen werden kann.

**Messung:** Das $^{44}Ca/^{40}Ca$-Isotopenverhältnis wird Massenspektrometrisch entweder über die Thermionen- oder Plasma-Massenspektrometrie bestimmt. Bei der Thermionen-Massenspektrometrie muss der Lösung vor der Messung ein Ca-Spike bekannter isotopischer Zusammensetzung beigesetzt werden, um die Massendiskriminierung während der Thermionen-Massenspektrometrie nach der Messung heraus rechnen zu können.

Bei der Plasma-Massenspektrometrie kann ebenfalls ein Spike hinzugegeben werden, um die Präzision der Messung zu erhöhen. Die Messung kann am Plasma-Massenspektrometer auch mittels der sogenannten "*Bracketing-Standard-Methode*" durchgeführt werden, bei der die Korrektur für die Massendiskreminierung im Plasma-Massenspektrometer, mittels der Normalisierung auf einen mit zu messenden Standard bekannter isotopischer Zusammensetzung durchgeführt wird. Die Besonderheit bei der Plasma-Massenspektrometrie von Kalzium ist, dass man in der Regel kein $^{44}Ca/^{40}Ca$ Verhältnis direkt messen kann, da es einen Isobaren-Effekt mit $^{40}Ar$, welches als Trägergas im Gerät fungiert, gibt. Um zu Werten zu kommen wird daher zunächst das $^{42}Ca/^{44}Ca$-Verhältnis gemessen, und dann auf das $^{44}Ca/^{40}Ca$ Verhältnis umgerechnet.

In der Regel liefert das Thermionische Verfahren eine etwas bessere Präzision als das Plasma Verfahren, gleichwohl ist der Probendurchsatz beim Plasma-Verfahren höher.

In der Tab. 1 ist das Beispiel einer (EXCEL)-basierten Datenauswertung zur Berechnung von Ausfällungstemperaturen mittels der Ca-Isotopenwerte ($\delta^{44/40}Ca$) zu sehen.

Tabelle 1

| | | | | Meerwasserwert: | 1.15 |
|---|---|---|---|---|---|
| **1** | **2** | **3** | **4** | **5** | **6** |
| | | | | $T_{d44/40Ca}$ (°C) | |
| **Probenliste** | $\delta^{44/40}$Ca (‰) | stat. Error (‰) | $\Delta^{44/40}$Ca (‰) | Temp. (°C) | stat. Error (°C) |
| **1** | 0.63 | 0.12 | -0.52 | 47 | 9 |
| **2** | 0.97 | 0.27 | -0.18 | 64 | 18 |
| **3** | 0.85 | 0.08 | -0.3 | 58 | 5 |
| **4** | 0.84 | 0.09 | -0.31 | 58 | 6 |
| **5** | 0.7 | 0.21 | -0.45 | 51 | 15 |
| **6** | 1.06 | 0.16 | -0.09 | 69 | 10 |
| **7** | 1.32 | 0.19 | 0.17 | 82 | 12 |
| **8** | 0.88 | 0.17 | -0.27 | 60 | 11 |
| **9** | 0.67 | 0.33 | -0.48 | 49 | 24 |
| **10** | 1.14 | 0.16 | -0.01 | 73 | 10 |
| **11** | 1.75 | 0.07 | 0.6 | 103 | 4 |
| **12** | 1.31 | 0.22 | 0.16 | 81 | 14 |
| **13** | 1.13 | 0.09 | -0.92 | 72 | 5 |

Die Spalte 1 beinhaltet die Probennummer. Spalte 2 beinhaltet den gemessenen Ca-Isotopenwert ($\delta^{44/40}$Ca) und Spalte 3 den dazugehörigen statistischen Messfehler. In Spalte 4 steht der $\Delta^{44/40}$Ca, welcher sich aus der Subtraktion der Werte aus Spalte 3 und dem Meerwasserwert, dieser wird aus dem Alter der Lösung ermittelt. Das Alter der Lösung, üblicherweise Meerwasser, wird aus deren $^{87}$Sr/$^{86}$Sr-Isotopie ermittelt, ergibt. In Spalte 5 wird dann aus den Werten von Spalte 4 und der Gleichung 1, die Ausfällungstemperatur in °C berechnet (T $\delta_{44/40Ca}$(°C)). Der statistische Fehler für die Temperatur in Spalte 6 wird aus den Werten Spalten 3, 4 und 5 ermittelt.

$$(1)\ T\ (°C) = (\Delta^{44/40}Ca + 1{,}46) / 0{,}02$$

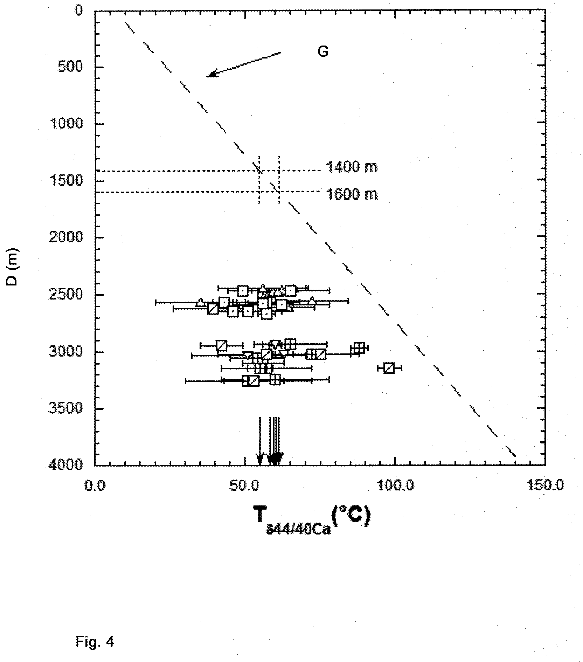

In der Fig. 4 sind nun die berechneten Temperaturwerte (in °C) aus der Tabelle 1 als Funktion ihrer Teufe dargestellt. Die Symbole entsprechen dabei ganz bestimmten Bohrlokationen. Die Pfeile in der Darstellung markieren jeweils die durchschnittlichen Ausfällungstemperaturen für die verschiedenen Symbole bzw.
Lokationen. Zusammen mit den Datenpunkten verschiedener Lokationen ist auch der thermische Gradient (Gleichung 2) dargestellt.

$$(2)\qquad T_{geogen} = 15°C + (0.033\ °C/m)*Tiefe(m)$$

Die Fig. 4 zeigt, dass die Ausfällungstemperaturen (°C), so wie sie mittels der gemessenen Ca-Isotopenverhältnisse ermittelt werden, nicht mit den Werten des geogenen Temperaturgradienten (gebrochene Linie) übereinstimmen und eine zu große Teufe relativ zur Temperatur anzeigen. Letzteres ist darauf zurückzuführen, dass die Karbonate zu einem früheren Zeitpunkt welcher der Tiefe entspricht ausgefallen sind, danach aber durch die weiter fortschreitende Absenkung in eine größere Teufe versetzt wurden.
Aus der Fig. 4 ist zu sehen, dass die Ausfällungstemperaturen (T $\delta_{44/40Ca}$) bei gleicher Temperatur eine höhere Teufe annehmen. So zeigen eine große Anzahl von Messungen in einer Teufe von ca. 2500 m eine Temperatur von ~50°C an. Der geogene Temperaturgradient zeigt bereits zwischen -1500 m eine Temperatur von ~50°C. Wohingegen bei -2500 m eine Temperatur von ~90°C zu erwarten wäre.
Diese scheinbare Diskrepanz basiert darauf, dass die Karbonate bereits zu einem früheren Zeitpunkt ausgefällt wurden und zwar als sich das Gestein, entsprechend seiner Absenkungsgeschichte, in einer Tiefe von -1500 m befand. Da die Ausfällung der Karbonate immer mit der Reifung von Erdöl in Verbindung steht, markiert diese Tiefe bzw. das entsprechende Alter auch den Beginn der Erdöleinwanderung in das Speichergestein.
Das Alter und die Absenkungsgeschichte kann aus dem $^{87}$Sr/$^{86}$Sr-Verhältnis errechnet werden. Hier im konkret gemessenen Fall beträgt das $^{87}$Sr/$^{86}$Sr-Verhältnis des Wirtsgestein -0.7075 was einem erdgeschichtlichem Alter von -190 Ma entspricht. Aus der bekannten heutigen Teufe von -2500 m kann eine durchschnittliche Absenkungsrate von (2500 m/190 Ma) von -13 m/Ma errechnet werden. Aus der Ausfällungstiefe von -1500 m ergibt sich der Zeitpunkt der Ausfällung zu ~115 Ma. Diese Zusammenhänge können nun in einer empirischen Alters-Tiefen Beziehung (empirisch entwickeltes Beckenmodell Fig. 5) dargestellt werden.

Dieses empirisch, mittels der gemessenen Ca- und Sr-Isotopenverhältnisse ermittelte Beckenmodell kann nunmehr mit den auf theoretischen Annahmen und seismischen Profilen beruhenden Beckenmodell verglichen werden. Im Idealfall stimmen die Ergebnisse überein, im Diskrepanzfall kann eine Kalibrierung des theoretischen Modells auf das empirische Beckenmodell durchgeführt werden.

Bezugszeichenliste

A       Alter
D       Tiefe, Teufe
G       geothermischer Gradient
T       Temperatur
xx      Gesteinsposition (0,033 °C/m)
x1      Gesteinsposition an der Oberfläche
x2      Gesteinsposition bei ungefährer Zeitpunkt und Teufe der CaCO3 Ausfällung
x3      Gesteinsposition heute

**Patentansprüche**

1.  Verfahren zur Verifikation von Alters-Tiefen-Beziehungen von Gestein in Sedimentbecken durch Rekonstruktion der Absenkungsrate von Proben,
    **dadurch gekennzeichnet, dass**
    durch Bestimmung der in Zusammenhang gesetzten Ausfalltiefe und der Ausfällungstemperatur einer Karbonatausfällung über das Ca-Isotopenverhältnis und den Vergleich mit dem geogenen Gradienten die geologische Geschichte bestimmten Sedimentgesteins, aus dem Proben genommen werden, in einem Fixpunkt festgelegt wird.

2.  Verfahren nach Anspruch 1, **gekennzeichnet durch** die Schritte :

    i) Nehmen einer Probe des Sedimentgesteins aus einer vorbekannten, heutigen Tiefe,
    ii) Herauslösen des ausgefallenen Kalziumcarbonats aus der Probe des Sedimentgesteins mittels verdünnter Säuren,
    iii) Bestimmung eines Ca-Isotopenverhältnisses,
    iv) Bestimmung einer $CaCO_3$-Fällungstemperatur ($T_{Ausfall}$), und
    v) Ermittlung der $CaCO_3$-Fällungstiefe zur Bestimmung des Fixpunktes in seiner Tiefenlage X(m) bei dem das $CaCO_3$ in der Erdkruste bei bekanntem geothermischen Gradienten aus einer Mutterlösung des erdgeschichtlichen Ablagerungsmileus ausgefallen ist.

3.  Verfahren nach Anspruch 2, **dadurch gekennzeichnet, dass** das Ca Isotopenverhältnis der beiden häufigsten Ca-Isotope $^{40}Ca$ und $^{44}Ca$ ($^{44}Ca/^{40}Ca$) zur Ermittlung des Isotopenverhältnisses des ausgefällten $CaCO_3$ (CC) herangezogen wird.

4.  Verfahren nach Anspruch 2 oder 3, **dadurch gekennzeichnet, dass** eine Berechnung des Ca-isotopischen Unterschiedes ($\Delta^{44/40}Ca$) zwischen einer erdhistorisch bekannten Lösung (BS) und dem aus der Lösung ausgefallenen $CaCO_3$ (CC) nach

$$(\Delta^{44/40}Ca = \delta^{44/40}Ca_{CC} - \delta^{44/40}Ca_{BS})$$

bei bekanntem $\delta^{44/40}Ca_{BS}$ erfolgt.

5.  Verfahren nach Anspruch 2 oder 3, **dadurch gekennzeichnet, dass** bei nicht bekanntem $\delta^{44/40}Ca_{BS}$ aus der beim Herauslösen des ausgefallenen Kalziumcarbonats aus Sedimentgesteinen mittels verdünnter Säuren gewonnen Lösung eine Abtrennung der Strontiumionen ($Sr^{2+}$) durch Ionenchromatographie erfolgt,
ein Sr-Isotopenverhältnis $^{87}Sr/^{86}Sr$ der beiden Sr-Isotope $^{87}Sr$ und $^{86}Sr$ ermittelt wird, und
eine Bestimmung des Ca-isotopischen Unterschiedes durch Vergleich des ermittelten Sr-Isotopenverhältnisses mit einem vorbekannten Sr-Isotopenverhältnis phanerozoischen Meerwassers erfolgt.

**6.** Verfahren nach einem der vorangehenden Ansprüche, **dadurch gekennzeichnet, dass** die Ermittlung der $CaCO_3$-Fällungstemperatur über den Zusammenhang $\Delta^{44/40}Ca(‰)=0.02\,(‰/°C)*$Temperatur $(°C)-1.46‰$ nach folgender Gleichung 1 erfolgt:

$$\text{Gleichung 1:}\qquad T(°C)=\frac{\Delta^{44/40}Ca+1.46}{0.02}$$

**7.** Verfahren nach einem der vorangehenden Ansprüche, **dadurch gekennzeichnet, dass** die Ermittlung der $CaCO_3$-Fällungstiefe (X (m)) nach folgender Gleichung 2 erfolgt:

$$X(m)=\frac{\delta^{44/40}Ca_{CC}-\delta^{44/40}Ca_{BS}+1.16}{0.00066}$$

Gleichung 2

**8.** Verfahren nach einem der vorangehenden Ansprüche, **dadurch gekennzeichnet, dass** der tatsächliche Temperaturverlauf durch direkte Temperaturmessungen im Bohrloch der Probenentnahme erfasst wird.

**Claims**

**1.** Method for verifying age-depth relationships of rock in sedimentary basins by reconstructing the subsidence rate of samples,
**characterized in that**,
by determining the related precipitation depth and the precipitation temperature of a carbonate precipitation via the Ca isotope ratio and comparing this with the geogenic gradient, the geological history of particular sedimentary rock, from which samples are taken, is determined in a fixed point.

**2.** Method according to claim 1, **characterized by** the steps:

i) taking a sample of the sedimentary rock from a previously known, present-time depth,
ii) dissolving the precipitated calcium carbonate out of the sample of sedimentary rock by means of dilute acids,
iii) determining a Ca isotope ratio,
iv) determining a $CaCO_3$ precipitation temperature ($T_{precipitation}$), and
v) ascertaining the $CaCO_3$ precipitation depth in order to determine the fixed point in its depth position X(m) at which the $CaCO_3$ in the earth's crust has precipitated from a parent solution of the geological depositional environment at a known geothermic gradient.

**3.** Method according to claim 2, **characterized in that** the Ca isotope ratio of the two most common Ca isotopes $^{40}Ca$ and $^{44}Ca$ ($^{44}Ca/^{40}Ca$) is used to ascertain the isotope ratio of the precipitated $CaCO_3$ (CC).

**4.** Method according to claim 2 or 3, **characterized in that** the Ca isotope difference ($\Delta^{44/40}Ca$) between a geological known solution (BS) and the $CaCO_3$ (CC) precipitated from the solution is calculated according to

$$(\Delta^{44/40}Ca=\delta^{44/40}Ca_{CC}-\delta^{44/40}Ca_{BS})$$

for a known $\delta^{44/40}Ca_{BS}$.

**5.** Method according to claim 2 or 3, **characterized in that**, if $\delta^{44/40}Ca_{BS}$ is not known, a separation of the strontium

ions ($Sr^{2+}$) from the solution obtained when dissolving the precipitated calcium carbonate out of sedimentary rocks by means of dilute acids takes place by way of ion chromatography,
a Sr isotope ratio $^{87}Sr/^{86}Sr$ of the two Sr isotopes $^{87}Sr$ and $^{86}Sr$ is ascertained, and
the Ca isotope difference is determined by comparing the ascertained Sr isotope ratio with a previously known Sr isotope ratio of Phanerozoic seawater.

**6.** Method according to any of the preceding claims, **characterized in that** the CaCO$_3$ precipitation temperature is ascertained via the relationship $\Delta^{44/40}Ca(‰)=0.02\,(‰/°C)$ *temperature (°C)-1.46‰ according to the following equation 1:

$$\text{equation 1:} \qquad T(°C) = \frac{\Delta^{44/40}Ca+1.46}{0.02}$$

**7.** Method according to any of the preceding claims, **characterized in that** the CaCO$_3$ precipitation depth (X(m)) is ascertained according to the following equation 2:

$$\text{equation 2:} \qquad X(m) = \frac{\delta^{44/40}Ca_{CC}-\delta^{44/40}Ca_{BS}+1.16}{0.00066}$$

**8.** Method according to any of the preceding claims, **characterized in that** the actual temperature curve is recorded by direct temperature measurements in the borehole from which the sample was taken.

**Revendications**

**1.** Procédé pour vérifier des rapports âge-profondeur de roches dans des bassins sédimentaires par reconstruction de la vitesse de sédimentation d'échantillons,
**caractérisé en ce que**,
l'histoire géologique de certaines roches sédimentaires, desquelles sont prélevés des échantillons, est déterminée en un point fixe par détermination de la profondeur de sédimentation rapportée à la température de sédimentation d'une sédimentation de carbonate par le biais de la composition isotopique du Ca et par comparaison au gradient géogène.

**2.** Procédé selon la revendication 1, **caractérisé par** les étapes consistant à :

i) Prélever un échantillon de la roche sédimentaire provenant d'une profondeur actuelle déjà connue,
ii) Dissoudre à l'aide d'acides dilués le carbonate de calcium précipité provenant de l'échantillon de roche sédimentaire,
iii) Déterminer une composition isotopique du Ca,
iv) Déterminer une température de précipitation du CaCO$_3$ (T$_{précipitation}$), et
v) Évaluation de la profondeur de précipitation du CaCO$_3$ en vue de déterminer la position en profondeur X(m) du point fixe dans laquelle le CaCO$_3$ a précipité dans la croûte terrestre à partir d'une solution mère de l'environnement de dépôt géologique sous un gradient géothermique connu.

**3.** Procédé selon la revendication 2, **caractérisé en ce que** la composition isotopique du Ca des deux isotopes de Ca les plus courants $^{40}Ca$ et $^{44}Ca$ ($^{44}Ca/^{40}Ca$) est utilisée pour déterminer la composition isotopique du CaCO$_3$ précipité (CC).

**4.** Procédé selon la revendication 2 ou 3, **caractérisé en ce qu'**un calcul de la différence isotopique du Ca ($\Delta^{44/40}Ca$) entre une solution géologiquement connue (BS) et le CaCO$_3$ précipité provenant de la solution (CC) est réalisé selon

$$(\Delta^{44/40}Ca = \delta^{44/40}Ca_{CC} - \delta^{44/40}Ca_{BS})$$

où $\delta^{44/40}Ca_{BS}$ est connu.

**5.** Procédé selon la revendication 2 ou 3, **caractérisé en ce que**, dans le cas de $\delta^{44/40}Ca_{BS}$ inconnu, une séparation par chromatographie ionique des ions strontium ($Sr^{2+}$) est réalisée à partir de la solution obtenue lors de la dissolution par des acides dilués du carbonate de calcium précipité provenant de roches sédimentaires, une composition isotopique du Sr $^{87}Sr/^{86}Sr$ des deux isotopes Sr $^{87}Sr$ et $^{86}Sr$ est déterminé, et une détermination de la différence isotopique du Ca est réalisée par comparaison de la composition isotopique du Sr déterminé avec une composition isotopique du Sr connu de l'eau de mer phanérozoïque.

**6.** Procédé selon l'une des revendications précédentes, **caractérisé en ce que** la détermination de la température de précipitation du $CaCO_3$ est réalisée sur la base de la relation $\Delta^{44/40}Ca$ (‰) = 0,02 (‰/° C.) * Température (° C) - 1,46 ‰ selon l'équation 1 suivante :

$$T(°C) = \frac{\Delta^{44/40}Ca + 1.46}{0.02}$$

Équation                     :

**7.** Procédé selon l'une des revendications précédentes, **caractérisé en ce que** la détermination de la profondeur de précipitation du $CaCO_3$ (X(m)) est réalisé selon l'équation 2 suivante :

$$X(m) = \frac{\delta^{44/40}Ca_{CC} - \delta^{44/40}Ca_{BS} + 1.16}{0.00066}$$

Équation 2 :

**8.** Procédé selon l'une des revendications précédentes, **caractérisé en ce que** la courbe de température réelle est déterminée par des mesures de température directes dans le trou de forage du prélèvement de l'échantillon.

Fig. 1

Fig. 2

Fig. 3

Fig. 4

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1435429 A1

### In der Beschreibung aufgeführte Nicht-Patentliteratur

- Controls on calcium isotope fractionation in sedimentary porewaters. **TEICHERT B M A et al.** Earth and planetary science letters. North Holland Publ., Co, 30. Marz 2009, vol. 279, 373-382

- Reconstruction of Caribbean Sea surface temperature and salinity fluctuations in response to the Pliocene closure of the Central American Gateway and radiative forcing, using delta<44/40>Ca, delta<18>0 and Mg/Ca ratios. **GUSSONE N et al.** Earth and planetary science letters. North Holland Publ., Co, 15. November 2004, vol. 227, 201-214